# EUROPÄISCHE PATENTSCHRIFT

(11) **EP 3 556 971 B1**
(45) Veröffentlichungstag und Bekanntmachung des Hinweises auf die Patenterteilung: **31.07.2024**
(21) Anmeldenummer: 19169539.4
(22) Anmeldetag: 16.04.2019
(51) Int. Cl.: E04G 21/14, F16G 11/10, F16G 11/04, F16G 11/14, E04G 21/12

(54) **BETONFERTIGTEIL MIT TRANSPORTANKER**
CONCRETE ELEMENT WITH TRANSPORT ANCHOR
PIECE EN BETON AVEC ANCRE DE LEVAGE

(30) Priorität: 20.04.2018 DE 202018102224 U
(43) Veröffentlichungstag der Anmeldung: 23.10.2019
(73) Patentinhaber: Philipp GmbH, 63741 Aschaffenburg (DE)
(72) Erfinder: Wislsperger, Norbert, 83404 Ainring (DE); Schwaiger, Hermann, 5760 Saalfelden (AT)
(74) Vertreter: WSL Patentanwälte Partnerschaft mbB

(56) Entgegenhaltungen:
- EP-A1- 3 296 481
- EP-A2- 0 262 763
- DE-A1- 102005 053 704
- DE-U1- 202007 010 456
- DE-U1- 202008 000 529
- DE-U1- 202008 007 387
- DE-U1- 29 517 201
- NL-C2- 2 002 541
- US-A- 1 569 303

## Beschreibung

Die vorliegende Erfindung betrifft ein Betonfertigteil mit mindestens einem Transportanker. Dabei weist der Transportanker mindestens ein Seil mit mindestens einem in dem Fertigbauteil verankerten Verankerungsabschnitt und einer Seilschlaufe auf, die sich außerhalb eines (einzubetonierenden) Verankerungsabschnittes befindet, wobei der Verankerungsabschnitt gekröpft ist und so angeordnet werden kann, dass der aus dem Betonfertigteil austretende Seilabschnitt gegenüber dem jenseits der Kröpfung befindlichen inneren Ende des Verankerungsabschnittes quer zur Längsrichtung des Seiles versetzt ist.

Transportanker für Fertigbauteile aus Beton sind in zahlreichen Varianten bekannt. In einer Variante ist bspw. eine Hülse mit einem Innengewinde bündig mit dem Rand eines Betonfertigteils in dieses eingelassen und über einen tiefer in das Betonfertigteil hineinreichenden Ankerteil in diesem verankert. Andere Transportanker sind bspw. Seilschlaufen, in die mit einem hier als Verankerungsabschnitt bezeichneten Ende in das Betonfertigteil eingegossen sind und sich mit einem Schlaufenabschnitt oder einer Seilöse aus dem Betonfertigteil heraus erstrecken, wobei die Schlaufe oder Öse bspw. in einen Kranhaken eingehängt werden kann, um auf diese Weise das Betonfertigteil zu transportieren, umzusetzen und/oder einzubauen.

Betonfertigteile sind soweit als möglich standardisiert, um die Herstellung und Lagerhaltung zu vereinfachen. Andererseits gibt es selbstverständlich für unterschiedliche Anwendungszwecke eine Vielzahl verschiedener Typen von Betonfertigteilen. Insbesondere für die Lagerhaltung ist es daher sinnvoll und aus praktischen Gründen häufig erforderlich, gleichartige oder ähnliche Betonfertigteile aufeinander zu stapeln, wobei die Standfläche eines oberen Betonfertigteiles auf einer Auflagefläche eines darunter befindlichen Betonteiles aufsitzt bzw. steht.

Je nachdem wie das betreffende Fertigteil geometrisch beschaffen ist, kann es aber sinnvoll sein, dass ein Transportanker in einem Bereich eines Betonfertigteils verankert ist, der sich unmittelbar unterhalb einer für das Aufeinanderstapeln gut oder allein geeigneten Auflagefläche befindet. Wenn sich ein Transportanker in Form eines Seilabschnittes oder einer Seilschlaufe aus einer solchen Auflagefläche heraus erstreckt, ist es schwierig bzw. überhaupt nicht möglich, die Betonfertigteile in platzsparender und einfacher Weise aufeinander zu stapeln, ohne die aus der Oberfläche austretende Seilschlaufen mit dem Gewicht der darüber gestapelten Fertigteile zu belasten. Dies könnte zum Knicken oder gar zum Bruch eines Seiles führen und ist deshalb sicherheitstechnisch unzulässig.

Ein Aufeinanderstapeln wird dann unmöglich oder es müssten die Betonfertigteile versetzt zueinander oder auch um unterschiedliche Achsen relativ zueinander verkippt gestapelt werden, was häufig zu weniger stabilen und weniger platzsparenden Aufbauten in der Lagerhaltung führt, sodass allenfalls wenige dieser Betonfertigteile jeweils aufeinander gestapelt werden können und demzufolge mehr Grundfläche und Platz für die Lagerhaltung benötigt wird.

Auch für den Transport mancher Betonfertigteile ist ein sich in Verlängerung eines Verankerungsabschnittes verlaufender Tragabschnitt eines Transportankers mitunter ungünstig. Dies gilt zum Beispiel für Sandwich-Bauteile mit einer inneren und einer äu ßeren betonschale, die zwar fest miteinander verbunden, aber durch eine Isolierschicht voneinander getrennt sind. Der Schwerpunkt eins solchen oder auch anderer Sandwichbauteile liegt in der Regel nicht in Verlängerung der Innen- oder Außenschale sondern im Bereich des Zwischenraums zwischen diesen. Eine in einer Randfläche der Innen oder Außenschale mündender oder hervorstehender Transportanker befindet sich dann im Allgemeinen nicht über einer Schwerpunktebene und dementsprechend hängt das Sandwich-Bauteil schief, wenn es über den Transportanker angehoben wird.

Die US 1,569,303 A1 offenbart einen Transportanker mit einer Seilschlaufe, wobei die Seilschlaufe gegenüber einem Ende des Verankerungsabschnittes abgebogen ist.

Die DE 20 2007 010 456 U1 offenbart ein Befestigungselement zum Befestigen eines Ankers an einer Bewährung eines Betonteils, wobei das Befestigungselement einen Spannbügel aufweist, der im montierten Zustand Abschnitte des Ankers und der Bewährung unter Spannung formschlüssig umgreift.

Die DE 20 2008 007 387 U1 offenbart einen Seilschlaufenkasten mit Seilschlaufe, bestehend aus einem länglichen, rohrförmigen Gehäuse, welches einen entsprechenden länglichen Hohlraum mit einer Öffnung zum Hindurchführen der Seilschlaufe definiert, die sich nach ihrer Aufnahme in dem Hohlraum mit einer Seilöse in Längsrichtung des Hohlraumes erstreckt, während die freien Enden der Seilschlaufe sich aus einer Öffnung des Gehäuses heraus und senkrecht zur Längsrichtung des Hohlraums erstrecken, wobei mindestens eine der Stirnseiten des Gehäuses offen ist, in welche offene Stirnseite die durch einen von dem Gehäuse separaten Winkelhalter in der im Wesentlichen um 90° abgewinkelten Stellung gehaltene Seilöse einführbar ist, wobei das offene Ende der Seilböse bzw. die abgewinkelten Enden der Seilschlaufe aus der offenen Stirnseite oder einer an die Stirnseite angrenzenden Öffnung einer Unterseite des Gehäuses herausragen und wobei der verbleibende freie Querschnitt der offenen Stirnseite und gegebenenfalls der angrenzenden Öffnung durch einen stirnseitigen Stopfen verschließbar ist.

Aus der DE 20 2008 000 529 U1 ist zudem eine Vorrichtung für die abgewinkelte Halterung einer Seilschlaufe bekannt. Um eine entsprechende Vorrichtung zu schaffen, die in der Handhabung einfach und außerdem kostengünstig ist, wird dort vorgeschlagen, dass die Halterung aus einem im Wesentlichen S- oder E-förmigen Bügel besteht, der einen mittleren und zwei äußere im wesentlichen horizontale Bügelabschnitte sowie zwei im Wesentlichen vertikale Bügelabschnitte aufweist, die die drei horizontalen Bügelabschnitte zu der S- oder E-Form miteinander verbinden, wobei mindestens eines der von dem jeweils nächstliegenden vertikalen Bügelabschnitt abgewandten Enden der äußeren Bügelabschnitte einen weiteren, gegenüber dem äußeren Bügelabschnitt abgewinkelten Endabschnitt aufweist und wobei die von dem mittleren Bügelabschnitt sowie je einem vertikalen und je einem äußeren Bügelabschnitt gebildeten Augen für die Aufnahme von je zwei parallelen Abschnitten eines Seiles ausgelegt sind, die zu einer Seilschlaufe zusammengelegt sind.

Die DE 10 2005 053 704 A1 offenbart eine Seilbremsanordnung mit zwei Anschlussstellen. Zwischen diesen Anschlussstellen ist ein Seilbremselement mit einer mit Bohrungen versehenen Bremsplatte und mit mehreren in den Bohrungen mit Widerstand durchziehbaren Seilstücken vorgesehen. Die Bremsplatte ist mit den in mehreren Reihen hintereinander liegenden Bohrungen und an einem Ende mit der ersten Anschlussstelle versehen. An der zweiten der ersten abgekehrten Anschlussstelle sind die Seilstücke miteinander verbunden. Jedes der Seilstücke ist einzeln durch je eine Reihe der hintereinander liegenden Bohrungen unter Wechsel der Durchführungsrichtung der Seilstücke in den aufeinander folgenden Bohrungen durchgeführt. Die Enden der Seilstücke die aus den letzten Bohrungen herausragen, sind mit Pressklemmen als Anschlagstücke abgeschlossen. Dieses Seilbremselement ist selbst in unwegsamen Geländen gut transportierbar, weist eine gut wählbare Auslaufstrecke und eine durch die Anzahl der Seilstücke und der Bohrungen in der Bremsplatte wählbare, erhöhbare Bremskraft auf.

Die DE 10 2005 053 704 A1 offenbart einen Halter für ein Seil, der zwei voneinander beabstandete Seilführungsabschnitte und eine Reaktionsfläche zwischen den Führungsabschnitten umfasst, wobei das Seil im Gebrauch durch die Führungsabschnitte läuft und ein Element über die Reaktionsfläche läuft, um das Seil in Querrichtung abzulenken, wodurch eine axiale Bewegung des Seils durch den Halter verhindert wird.

Der vorliegenden Erfindung liegt gegenüber diesem Stand der Technik die Aufgabe zu Grunde, einen Transportanker der eingangs genannten Art zu schaffen, der bei entsprechendem Einbau in ein Betonfertigteil einerseits die erforderliche und gewünschte Tragfähigkeit für das Bauteil garantiert, andererseits aber dennoch die Stapelbarkeit von Betonfertigteilen nicht beeinträchtigt und der nach Möglichkeit die Transportfähigkeit von Sandwichbauteilen verbessert.

Gemäß der vorliegenden Erfindung wird diese Aufgabe durch Anspruch 1 gelöst, nämlich dadurch gelöst, dass der gekröpfte Abschnitt einen Kröpfbügel aufweist, der mindestens drei im Wesentlichen hintereinander angeordnete, geschlossene oder teilweise seitlich offene Ösen aufweist, die in einer Ebene oder in zueinander versetzten parallelen Ebenen angeordnet sind, wobei mindestens ein Seilabschnitt abwechselnd in entgegengesetzter Richtung durch die Ösen hindurch geführt ist, so dass der Seilabschnitt auf einer der Eintrittsseite der ersten Öse gegenüberliegenden Seite der dritten Öse aus dem Kröpfbügel austritt.

Die Kröpfung des Transportankers ermöglicht es, einerseits den Verankerungsabschnitt in dem Bereich des Betonfertigteiles zu verankern, der eine ausreichend hohe Tragfähigkeit garantiert, wobei andererseits der aus dem Betonfertigteil austretende Abschnitt des Transportankers, nämlich das eigentliche Tragseil mit der Seilschlaufe, in einem Bereich des Betonfertigteils aus dessen Oberfläche austritt, der sich relativ zu dem Verankerungsabschnitt versetzt befindet, sodass die Fläche oberhalb des Verankerungsabschnittes als Auflagefläche genutzt werden kann, ohne dass dabei das austretende Seil bzw. die austretende Seilschlaufe stört.

Dabei soll außerdem sichergestellt sein, dass an dem Übergang von dem Verankerungsabschnitt zu dem austretenden Seilabschnitt der Beton nicht oder nur geringfügig durch Querkräfte belastet wird, die ansonsten zum Ausbruch des Betons in dem den austretenden Seilabschnitt umgebenden Bereich auftreten könnten.

In einer Ausführungsform weist der Transportanker im Bereich der Kröpfung zwei parallel verlaufende Seilabschnitte auf, die im weiteren Verlauf dieser Seilabschnitte (jenseits des Verankerungsteils) gemeinsam die Seilschlaufe bilden.

Weiterhin ist gemäß der Erfindung vorgesehen, dass der gekröpfte Abschnitt des Transportankers einen Kröpfbügel aufweist, der mindestens drei im Wesentlichen hintereinander angeordnete, geschlossene oder teilweise seitlich offene Ösen aufweist, die in einer Ebene (E) oder in zueinander versetzten parallelen Ebenen angeordnet sind, wobei mindestens ein Seilabschnitt abwechselnd in entgegengesetzter Richtung durch die Ösen hindurch geführt ist.

Wenn ein Seilabschnitt durch drei hintereinander liegende Ösen abwechselnd in entgegengesetzter Richtung hindurchgeführt wird, tritt das Seil auf einer der Eintrittsseite der ersten Öse gegenüberliegenden Seite der dritten Öse aus dem Kröpfbügel aus, was zwangsweise zu einer Kröpfung bzw. einem Versatz des aus der dritten Öse austretenden Seilabschnittes gegenüber dem in die erste Öse eintretenden Seilabschnitt führt und damit die Kröpfung bereitstellt.

Will man die Kröpfung noch deutlicher ausprägen, so kann man die äußeren Ösen der Reihe senkrecht zu der gemeinsamen Ebene verschieben, sodass sie in parallelen oder zumindest in etwa parallelen Ebenen relativ zueinander versetzt angeordnet sind, wobei insbesondere die Ebene der ersten Öse gegenüber der Ebene der dritten Öse in Richtung der gewünschten Kröpfung versetzt ist.

In einer Ausführungsform besteht der Kröpfbügel aus einem starren Stahldraht, der bei Anordnung in einer Ebene vier in dieser Ebene liegende parallele Querstege aufweist sowie drei Längsstege aufweist, die jeweils ein Ende zweier benachbarter Querstege miteinander verbinden und die entlang der Reihe aufeinander folgender paralleler Querstege abwechselnd gegenüberliegend zwischen je zwei Enden paralleler Querstege verlaufen. Der Stahldraht verläuft dementsprechend mäandernd bzw. entlang einer Schlangenlinie, die aus den im Wesentlichen gerade verlaufenden Querstegen und die Querstege verbindenden Längsstegen besteht. Diese geometrische Form kann auch durch andere Elemente als Stahldraht gebildet werden, die ausreichend biegefest und stabil sind, um die hindurchgeführten Seilabschnitte in einer gekröpften Position zu halten.

Ein Kröpfbügel aus einem linienförmigen Element wie ein Stahldraht kann auch zwei Endschnitte aufweisen, die jeweils in entgegengesetzten Richtung senkrecht zur Ebene der angrenzenden Ösen abgewinkelt sind. Solche abgewinkelten Endabschnitte stellen sicher, dass das Seil bzw. die Seilabschnitte, die durch die endständigen Ösen eines Kröpfbügels hindurch verlaufen, aus den jeweils nach einer Seite offenen Enden dieser ersten bzw. dritten Öse nicht herausrutschen können.

Alternativ zu der Ausbildung aus Stahldraht könnte der Kröpfbügel auch aus drei Ösen bestehen, die in einer Reihe hintereinander aus einem annähernd rechtwinkligen Blechstreifen ausgespart, insbesondere ausgestanzt sind. Auch bei einem solchen Blechstreifen kann man durch zusätzliches Abwinkeln eines solchen Streifens senkrecht zu der Ebene des Blechstreifens einen seitlichen Versatz insbesondere der ersten und dritten Öse relativ zueinander erzeugen, um auf diese Weise die Kröpfung zu verstärken.

In einer bevorzugten Ausführungsform der Erfindung bilden die Ösen jeweils parallele Seiten, zum Beispiel in Form der erwähnten Querstege, die senkrecht zu der Erstreckung der durch die Öse hindurch geführten Seilabschnitte verlaufen. Dies ist insbesondere sinnvoll, wenn zwei parallele Seilabschnitte durch die Ösen hindurchgeführt sind, die dann beide nebeneinander jeweils in gleicher Weise an den parallelen Rändern bzw. Kanten der Ösen anliegen.

Zweckmäßigerweise besteht der Transportanker allein aus einem Kröpfbügel und einem einzigen durchgehenden Seil, dessen freie Enden parallel zusammengeführt sind und durch den Kröpfbügel verlaufen, wobei in einem mittleren Abschnitt des Seiles entfernt von dem Kröpfbügel eine Seilschlaufe gebildet wird. Dabei können die freien Enden des Seiles, die parallel nebeneinander liegen, zusätzlich durch eine Quetschhülse miteinander fest verbunden sein, wobei diese Quetschhülse zusammen mit dem Kröpfbügel und den durch diesen hindurchgeführten, parallelen Seilabschnitten den Verankerungsabschnitt des Transportankers bilden.

In einer Ausführungsform der Erfindung ist das Seil des Transportankers ein Drahtseil, insbesondere ein Stahldrahtseil.

In einer Ausführungsform weist das Betonfertigteil zwei unter Bildung eines Eckbereiches entlang je einer Kante verbundene und im Wesentlichen zueinander senkrechte Wandabschnitte sowie mindestens einen Transportanker auf, wobei der Verankerungsabschnitt in dem durch die Wandabschnitte gebildeten Eckbereich sich in einen dieser Wandabschnitte in dessen Erstreckung weg von dem Eckbereich hinein erstreckt und in diesem verankert ist und sich mit einer Seilschlaufe versetzt zu einer gedachten Verlängerung dieses Wandabschnittes neben dem Eckbereich seitlich aus dem anderen Wandabschnitt heraus erstreckt.

In weiterer Ausgestaltung eines erfindungsgemäßen Betonfertigteils weist dieses Betonfertigteil zwei parallele Wandabschnitte und eine die beiden Wandabschnitte verbindende Platte sowie mindestens zwei Transportanker auf. Dabei erstreckt sich mindestens ein Seilabschnitt je eines Transportankers auf der von den parallelen Wandabschnitten abgewandten Seite an einer Position neben der gedachten Verlängerung der parallelen Wandabschnitte aus der Platte heraus, während der Verankerungsabschnitt des Transportankers sich durch die Platte hindurch und versetzt zu dem aus der Platte austretenden Seilabschnitt in jeweils einen der parallelen Wandabschnitte hinein erstreckt.

Zweckmäßig ist dabei eine Ausgestaltung des Betonfertigteils, die mindestens vier Transportanker aufweist, die an den Ecken eines gedachten Rechtecks angeordnet sind, wobei die Verankerungsabschnitte von je zwei Transportankern sich jeweils in einen der parallelen Wandabschnitte hinein erstrecken, während die austretenden Seilabschnitte bzw. Seilösen sich versetzt zu den parallelen Wandabschnitten aus der diese verbindenden Platte heraus erstrecken.

Eine alternative Anwendung eines gekröpften Transportankers ergibt sich in Verbindung mit Sandwichbauteilen, bei welchen der Schwerpunkt des Bauteils in dem Zwischenraum zwischen einer Außenwand bzw. Außenschale und einer Innenwand bzw. Innenschale liegt. Der gekröpfte Transportanker kann dann so in eines der beiden Wandteile einbetoniert werden, dass er zwar aus einer Randfläche (wahlweise auch aus einer Begrenzungsfläche des Zwischenraums) des Wandteils austritt, aufgrund der Kröpfung sich jedoch der tragende Seilabschnitt bzw. die Seilschlaufe über dem Zwischenraum, und im Idealfall über einer Schwerpunktebene zwischen und parallel zu den beiden Wandteilen befindet.

Dabei ist es außerdem möglich eine nach innen in den Zwischenraum vorspringende Wandausbuchtung eines oder beider Wandteile vorzusehen, aus deren Stirnseite der Transportanker austritt.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
Figur 1 drei verschiedenen Varianten eines Kröpfbügels, wie er aus einem ebenen Blechmaterial hergestellt werden kann.
Figur 2 einen aus Stahldraht gebogenen Kröpfbügel.
Figur 3 schematisch eine Seitenansicht eines Transprotankers mit einem Verankerungsteil und einer (als solche nicht sichtbaren) Seilschlaufe.
Figur 4 ähnliche schematische Ansichten eines Transportankers und Verwendung des Kröpfbügels nach Figur 2.
Figur 5 eine perspektivische Ansicht der Variante gemäß Figur 3.
Figur 6 eine perspektivische Ansicht der Variante gemäß Figur 4.
Figur 7 schematisch ein Betonfertigteil mit eingegossenen Transportankern gemäß den Figuren 3 und 5.

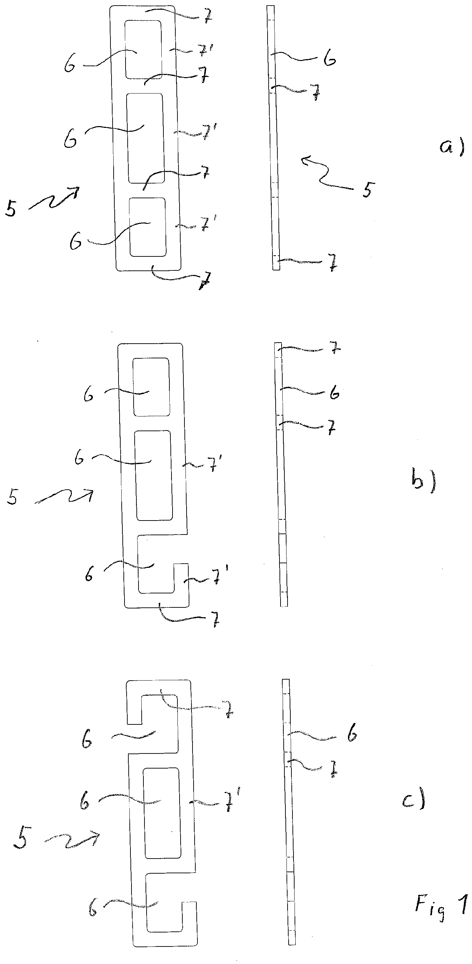

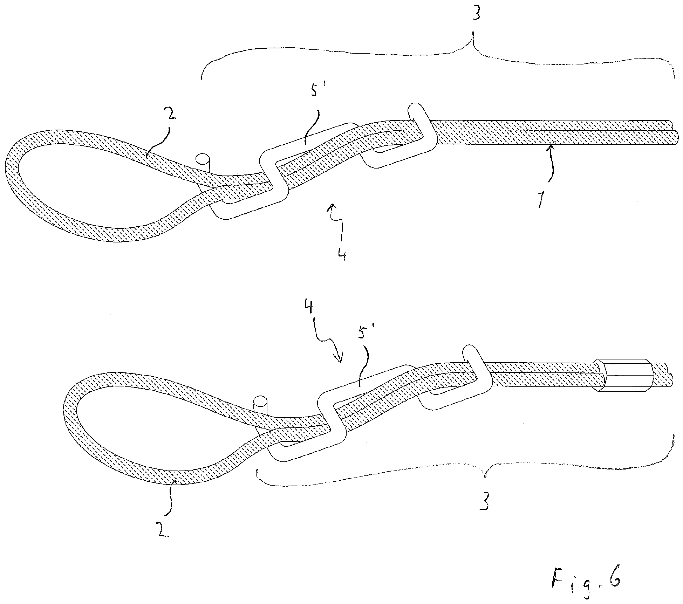

In Figur 1 erkennt man in den Teilbildern a, b und c, jeweils Varianten eines Kröpfbügels 5, der aus einem gestanzten, rechteckigen Blechstreifen hergestellt ist, wobei die verschiedenen Varianten des Kröpfbügels in den Teilbildern a bis c jeweils mit derselben Bezugszahl 5 gekennzeichnet sind. Die drei Varianten unterscheiden sich nur dadurch, dass im Falle der Figur 1a die 3 Ösen 6 allesamt geschlossen sind, während im Falle der Figur 1b eine der Ösen seitlich offen ist und im Falle der Figur 6c zwei Ösen 6 seitlich teilweise offen sind, was das Einführen eines oder mehrerer Seilabschnitte in die Ösen 6 erleichtert.

Jeder der Kröpfbügel 5 weist als gemeinsames Merkmal insgesamt vier Querstege 7 sowie die Enden Querstege auf mindestens einer Seite verbindende Längsstege 7' auf, die gemeinsam drei in einer Ebene hintereinander liegende Ösen 6 bilden, durch die ein Seilabschnitt bzw. zwei parallele Seilabschnitte abwechselnd in entgegengesetzter Richtung hindurchgeführt werden können.

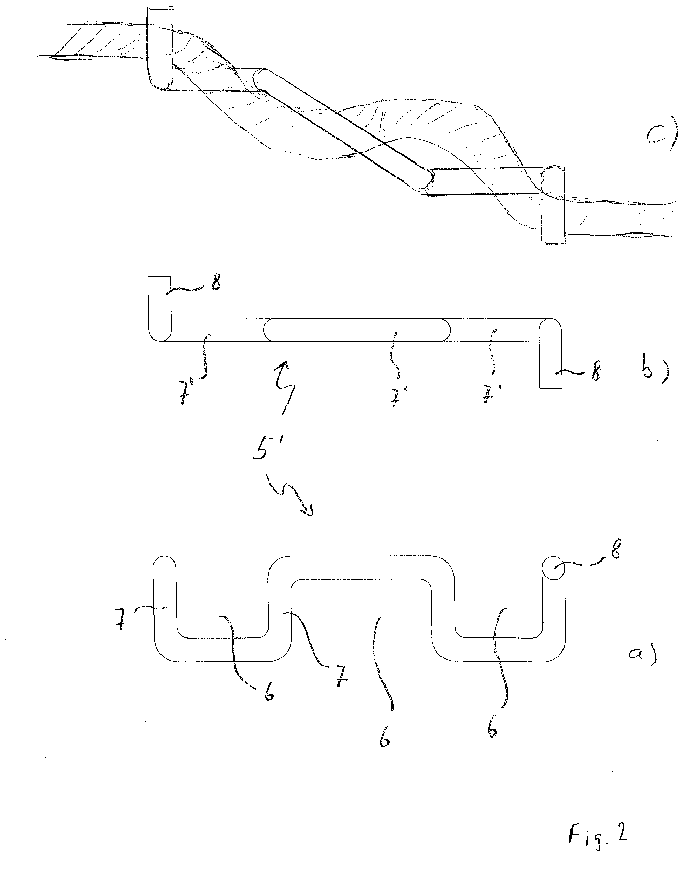

Bei der Variante eines Kröpfbügels 5' gemäß Figur 2 ist dieser aus einem massiven, gebogenen Stahldraht hergestellt, der in einer Ebene mäanderförmig bzw. in Schlangenlinien gebogen ist, sodass ebenfalls drei Ösen 6 gebildet werden, die jeweils durch zwei parallele Querstege 7 und Längsstege 7' begrenzt werden. Außerdem weist dieser Kröpfbügel 5' auch noch Endabschnitte 8 auf, die senkrecht zu der Ebene der Ösen 6 abgebogen sind.

Figur 2c zeigt eine weitere Variante eines Kröpfbügels 5", bei welchem die erste und die dritte Öse relativ zueinander parallel versetzt sind, so dass diese beiden Ösen bzw. die die Ösen begrenzenden Quer- und Längsstege in zwei verschiedenen, parallelen Ebenen liegen. Die mittlere Öse 6 verläuft zwischen diesen Ebenen geneigt und verbindet die erste und die dritte Öse miteinander. Eine solche Variante kann das Ausmaß der Kröpfung gegenüber einem ebenen Kröpfbügel gemäß Figur 1 und 2a, b noch verstärken.

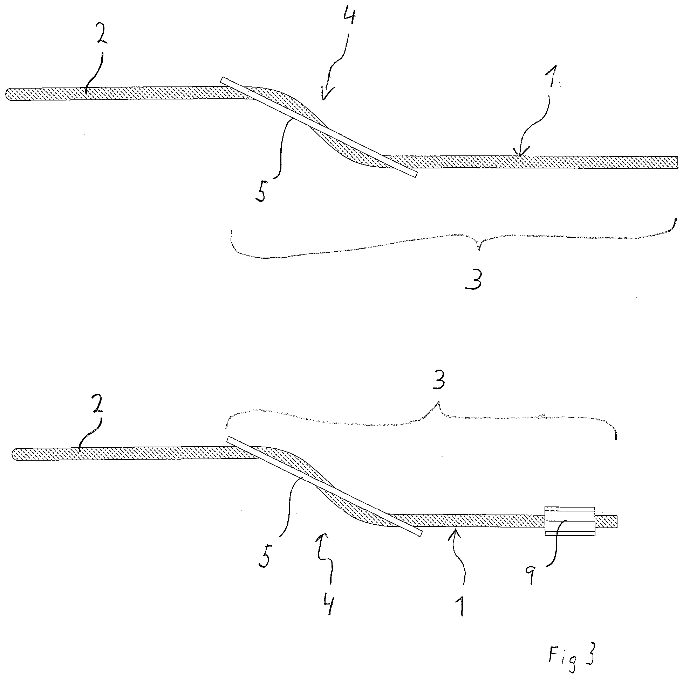

In Figur 3 erkennt man in einer Seitenansicht zwei Transportanker 10 bzw. 10', die jeweils aus einem einzigen durchgehenden Seil bestehen, dessen freien Enden zusammengelegt sind, wobei ein mittlerer Seilabschnitt eine Seilschlaufe 2 bildet, während die beiden zusammengelegten parallelen Endabschnitte des Seiles durch einen Kröpfbügel 5 hindurchgeführt sind und zusammen mit dem Kröpfbügel 5 den Verankerungsabschnitt 3 bilden. Die beiden Varianten des Transportankers 10 unterscheiden sich hier nur dadurch, dass in einem Fall die beiden freien Seilenden durch eine Quetschhülse 9 fest miteinander verbunden sind, während sie bei der anderen Variante frei nebeneinander liegend enden.

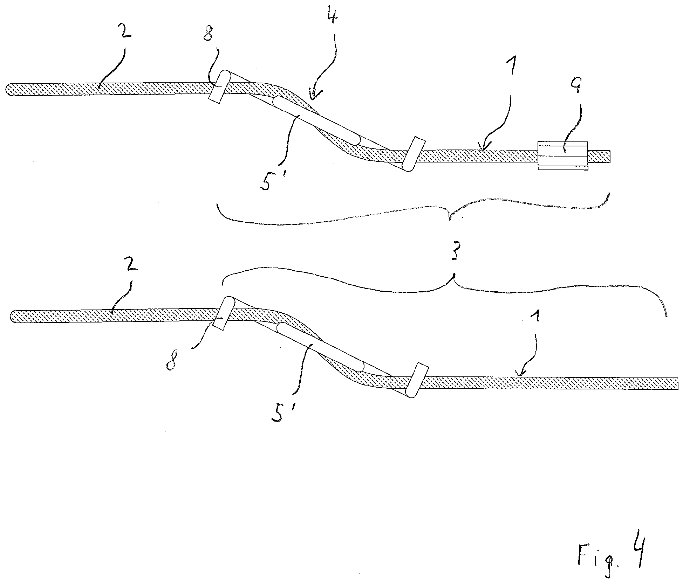

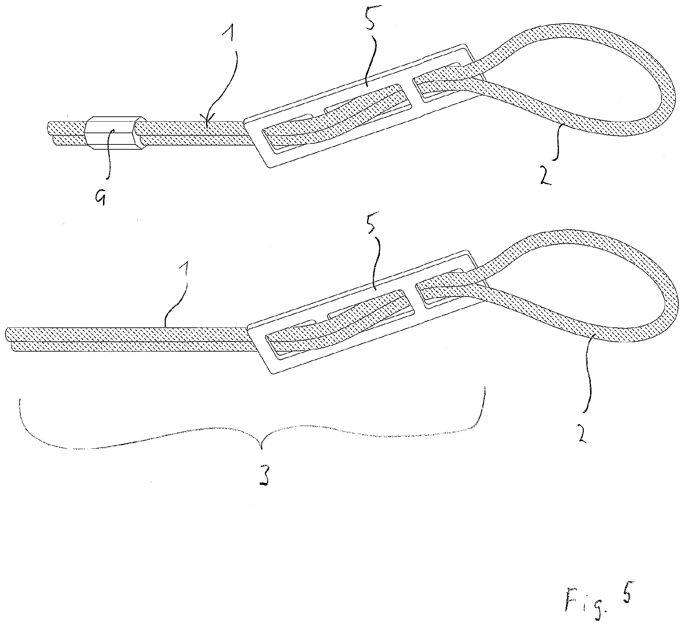

Figur 4 zeigt wiederum zwei ähnliche Transportanker 10, die unter Verwendung des Kröpfbügel 5` hergestellt sind, wie man an den abgebogenen Endabschnitten 8' erkennt. Daraus wird weiterhin deutlich, dass die abgebogenen Endabschnitte 8' dazu dienen, ein Herausrutschen des Seiles 1 bzw. der beiden parallelen Endabschnitte des Seiles 1' aus den seitlich offenen Ösen 6 des Kröpfbügels 5` zu verhindern. Im Übrigen besteht auch dieser Transportanker wie auch die vorherigen Ausführungsformen aus einem Seil 1, einer Seilschlaufe 2 und einem Kröpfabschnitt 4 mit dem Kröpfbügel 5 bzw. 5`, wobei der Kröpfabschnitt 4 bzw. der Kröpfbügel 5 zusammen mit den Endabschnitten des Seiles 1 den Verankerungsabschnitt 3 bilden. Auch bei den in Figur 4 dargestellten Varianten sind in einem Fall die freien Endabschnitte des Seiles durch eine Quetschhülse 9 verbunden, während sie im anderen Fall frei nebeneinander enden. Die in Figur 3 dargestellten Varianten sind nochmals in einer perspektivischen Ansicht in Figur 5 zu erkennen und die in Figur 4 dargestellten Varianten sind in einer perspektivischen Ansicht gemäß Figur 6 zu erkennen.

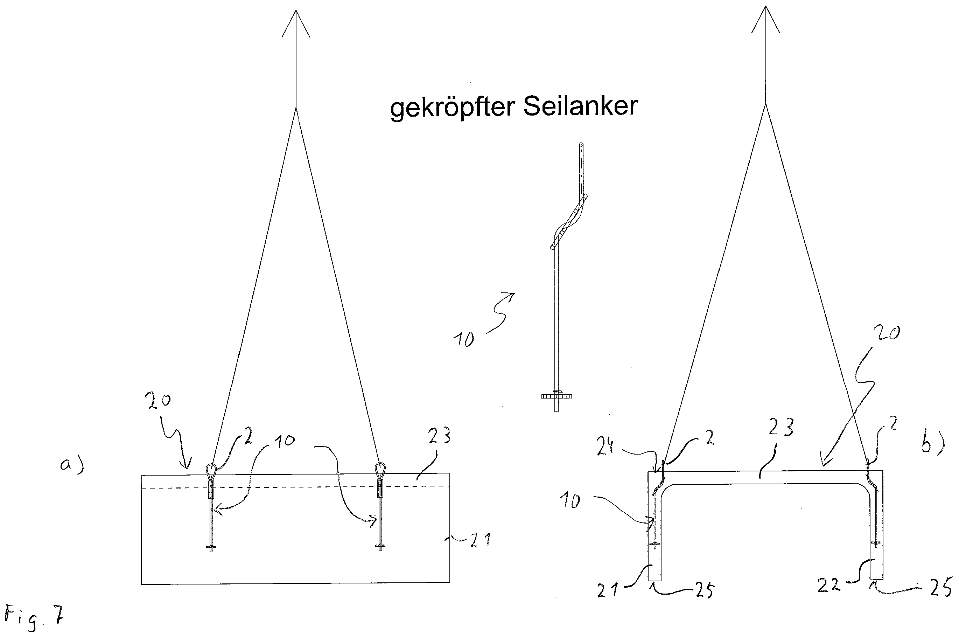

Figur 7 veranschaulicht den Einbauzustand eines entsprechenden gekröpften Transportankers in einem Betonfertigteil 20. Das Betonfertigteil 20 besteht in diesem Fall, wie man insbesondere in Figur 7b erkennt, aus zwei parallelen Wandabschnitten 21 und 22, deren obere Ränder durch eine Platte 23 miteinander verbunden sind. Die gedachte Verlängerung der parallelen Wandabschnitte 21, 22 durch die Platte 23 hindurch bildet jeweils eine Auflagefläche 24, auf welche die unteren Rand- bzw. Kantenflächen von Wandabschnitten 21, 22 eines weiteren, identischen Betonfertigteiles aufgesetzt werden könnten. Aufgrund der Kröpfung 4 kann sich dennoch der Transportanker senkrecht und relativ tief in die Wandabschnitte 21 bzw. 22 hinein erstrecken, während die aus der Oberseite der Platte austretende Seilschlaufe 2 neben der Auflagefläche 24 aus der Oberseite der Platte 23 heraustritt.

Zweckmäßigerweise sind für einen stabilen Transport eines solchen Betonfertigteils mindestens zwei Transportanker 10 im Abstand hintereinander in jedem der Wandteile 21 bzw. 22 vorgesehen, wie dies in Figur 7a veranschaulicht ist.

Für den Transport werden dann entsprechende Haken an Ketten oder Stahlseilen in die vier Seilschlaufen 2 eines solchen Betonfertigteils 20 eingehängt, sodass das Betonfertigteil lagestabil angehoben und auf einem anderen, gleichartigen Betonfertigteil 20 abgesetzt werden kann, wobei die unteren Randflächen 25 auf den Auflageflächen 24 des jeweils anderen Betonfertigteils 20 aufliegen.

### Bezugszeichen

- 1: Seil
- 1': Seil
- 2: Seilschlaufe
- 3: Verankerungsabschnitt
- 4: Kröpfabschnitt
- 5: Kröpfbügel
- 5`: Kröpfbügel
- 6: Öse
- 7: Quersteg
- 7`: Längssteg
- 8: Endabschnitt
- 8': abgebogener Endabschnitt
- 9: Quetschhülse
- 10: Transportanker
- 10': Transportanker
- 20: Betonfertigteil
- 21: Wandabschnitt
- 22: Wandabschnitt
- 23: Platte
- 24: Auflagefläche
- 25: untere Randfläche

## Patentansprüche

1. Betonfertigteil mit mindestens einem Transportanker, wobei der Transportanker ein Seil (1) mit mindestens einem in dem Betonfertigteil (20) verankerten Verankerungsabschnitt (3) und einer Seilschlaufe (2) an einem außerhalb des Verankerungsabschnittes (3) liegenden Abschnitt des Seiles (1) aufweist, wobei der Verankerungsabschnitt (3) gekröpft ist und so angeordnet ist, dass der aus dem Betonfertigteil austretende Seilabschnitt gegenüber dem jenseits der Kröpfung (4) befindlichen inneren Ende des Verankerungsabschnittes (3) quer zur Längsrichtung des Seiles (1) versetzt ist, wobei der gekröpfte Abschnitt einen Kröpfbügel (5) aufweist, der geschlossene oder teilweise seitlich offene Ösen (6) aufweist, die in einer Ebene (E) oder in zueinander versetzten parallelen Ebenen (E, E') angeordnet sind, **dadurch gekennzeichnet, dass** der Kröpfbügel mindestens drei im Wesentlichen hintereinander angeordnete Ösen (6) aufweist und mindestens ein Seilabschnitt (1a) abwechselnd in entgegengesetzter Richtung durch die Ösen (6) hindurch geführt ist, so dass der Seilabschnitt auf einer der Eintrittsseite der ersten Öse gegenüberliegenden Seite der dritten Öse aus dem Kröpfbügel austritt.

2. Betonfertigteil nach Anspruch 1, **dadurch gekennzeichnet, dass** im Bereich der Kröpfung zwei parallel verlaufende Seilabschnitte vorgesehen sind, die im weiteren Verlauf gemeinsam die Seilschlaufe bilden.

3. Betonfertigteil nach Anspruch 1, **dadurch gekennzeichnet, dass** der Kröpfbügel (5) aus einem starren Stahldraht besteht, der in einer Ebene (E) vier parallele Querstege (7) und zwei jeweils ein Ende zweier benachbarter Querstege miteinander verbindende Längsstege (7') aufweist, die abwechselnd zwischen gegenüberliegenden Enden der Querstege (7) verlaufen.

4. Betonfertigteil nach einem der vorstehenden Ansprüche 1 oder 3 **dadurch gekennzeichnet, dass** der Kröpfbügel (5') zwei Endabschnitte (8) aufweist, die in entgegengesetzte Richtung senkrecht zur Ebene der Quer- und Längsstege (7, 7') abgewinkelt sind.

5. Betonfertigteil nach einem der vorstehenden Ansprüche 1 oder 2 **dadurch gekennzeichnet, dass** der Kröpfbügel (5) aus drei Ösen (6) besteht, die in einer Reihe hintereinander aus einem annähernd rechtwinkligen Blechstreifen ausgespart, insbesondere ausgestanzt sind.

6. Betonfertigteil nach einem der vorstehenden Ansprüche 1 bis 5, **dadurch gekennzeichnet, dass** die drei Ösen (6) jeweils parallele Seiten aufweisen, die senkrecht zur Erstreckung der durch die Ösen (6) hindurchgeführten Seilabschnitte verlaufen.

7. Betonfertigteil nach einem der vorstehenden Ansprüche, **dadurch gekennzeichnet, dass** der Transportanker aus einem durchgehenden Seil (1) besteht, dessen freie Enden parallel zusammengeführt sind und durch einen Kröpfbügel (5, 5`) verlaufen, wobei in einem mittleren Abschnitt des Seiles (1) entfernt von dem Kröpfbügel (5, 5') eine Seilschlaufe (2) gebildet wird.

8. Betonfertigteil nach einem der vorstehenden Ansprüche, **dadurch gekennzeichnet, dass** das Seil ein Drahtseil, insbesondere ein Stahldrahtseil ist

9. Betonfertigteil nach einem der vorhergehenden Ansprüche, **dadurch gekennzeichnet, dass** das Betonfertigteil zwei unter Bildung eines Eckbereiches entlang je einer Kante verbundene und im Wesentlichen zueinander senkrechte Wandabschnitte (21, 22) sowie mindestens einen Transportanker 20 (10) aufweist, wobei der Verankerungsabschnitt in dem durch die Wandabschnitte gebildeten Eckbereich sich in einen dieser Wandabschnitte in dessen Erstreckung weg von dem Eckbereich hinein erstreckt und in diesem verankert ist und sich mit einer Seilschlaufe versetzt zu einer gedachten Verlängerung dieses Wandabschnittes neben dem Eckbereich seitlich aus dem anderen Wandabschnitt heraus erstreckt.

10. Betonfertigteil nach Anspruch 9, **dadurch gekennzeichnet, dass** das Betonfertigteil zwei parallele Wandabschnitte (21, 22) und eine die beiden Wandabschnitte (21, 22) verbindende Platte (23) sowie mindestens zwei Transportanker (10) aufweist, wobei mindestens ein Seilabschnitt je eines Transportankers sich auf der von den parallelen Wandabschnitten abgewandten Seite der Platte an einer Position neben der gedachten Verlängerung der parallelen Wandabschnitte aus der Platte (23) heraus erstreckt und der Verankerungsabschnitt (3) des Transportankers sich durch die Platte hindurch und versetzt zu dem aus der Platte austretenden Seilabschnitt in jeweils einen der parallelen Wandabschnitte hinein erstreckt.

11. Betonfertigteil nach Anspruch 10, **dadurch gekennzeichnet, dass** es mindestens 4 Transportanker aufweist, die an den Ecken eines gedachten Rechtecks angeordnet sind, wobei die Verankerungsabschnitte (3) von je zwei Transportankern sich jeweils in einen der parallelen Wandabschnitte (21, 22) hinein erstrecken und die Seilschlaufen (2) sich versetzt zu den parallelen Wandabschnitten aus der diese verbindenden Platte (23) heraus erstrecken.

12. Betonfertigteil nach einem der vorhergehenden Ansprüche, welches als Sandwich-Bauteil aus zwei miteinander verbundenen, parallelen Wandteilen aus Beton und einem Zwischenraum zwischen diesen gebildet ist, **dadurch gekennzeichnet, dass** ein oder mehrere Transportanker in mindestens einem der Wandteile vorgesehen sind, der bzw. die sich aus einer Randfläche eines der Wandteile derart erstrecken, das der Transportabschnitt sich in dem Zwischenraum oder einer gedachten Verlängerung des Zwischenraums befindet.

## Claims

1. A precast concrete element comprising at least one transport anchor, wherein the transport anchor comprises a rope (1) with at least one anchoring portion (3) anchored in the precast concrete element (20) and a rope loop (2) on a portion of the rope (1) lying outside the anchoring portion (3), wherein the anchoring portion (3) is cranked and is located such that the rope section emerging from the precast concrete element is offset transversely to the longitudinal direction of the rope (1) relative to the inner end of the anchoring portion (3) located beyond the crank (4), wherein the offset portion comprises an offset bracket (5) which has closed or partially laterally open eyelets (6) which are located in a plane (E) or in mutually offset parallel planes (E, E'), **characterised in that** the offset bracket comprises at least three eyelets (6) located substantially one behind the other and at least one rope portion (1a) is guided alternately in opposite directions through the eyelets (6), so that the rope portion emerges from the offset bracket on a side of the third eyelet opposite the entry side of the first eyelet.

2. The precast concrete element according to claim 1, **characterised in that** two parallel rope sections are provided in the area of the offset, which together form the rope loop in the further course.

3. The precast concrete element according to claim 1, **characterised in that** the offset bracket (5) comprises a rigid steel wire, which rigid steel wire comprises four parallel transverse webs (7) in one plane (E) and two longitudinal webs (7'), each connecting one end of two adjacent transverse webs, which run alternately between opposite ends of the transverse webs (7).

4. The precast concrete element according to one of the preceding claims 1 or 3, **characterised in that** the offset bracket (5') comprises two end portions (8) which are angled in opposite directions perpendicular to the plane of the transverse and longitudinal webs (7, 7').

5. The precast concrete part according to one of the preceding claims 1 or 2, **characterised in that** the offset bracket (5) consists of three eyelets (6) which are cut out, in particular punched out, in a row one behind the other from an approximately rectangular sheet metal strip.

6. The precast concrete part according to one of the preceding claims 1 to 5, **characterised in that** the three eyelets (6) each comprise parallel sides which run perpendicular to the extension of the rope portions passed through the eyelets (6).

7. The precast concrete element according to one of the preceding claims, **characterised in that** the transport anchor consists of a continuous rope (1), the free ends of which are brought together in parallel and run through an offset bracket (5, 5'), wherein a rope loop (2) is formed in a central section of the rope (1) remote from the offset bracket (5, 5').

8. The precast concrete element according to one of the preceding claims, **characterised in that** the rope is a wire rope, in particular a steel wire rope.

9. The precast concrete element according to any one of the previous claims, **characterised in that** the precast concrete element comprises two wall sections (21, 22), each connected along one edge to form a corner region and substantially perpendicular to one another, and at least one transport anchor 20 (10), wherein the anchoring portion in the corner region formed by the wall sections extends into one of these wall sections in its extension away from the corner region and is anchored therein and extends laterally out of the other wall section with a rope loop offset to an imaginary extension of this wall section next to the corner region.

10. The precast concrete element according to claim 9, **characterised in that** the precast concrete element comprises two parallel wall sections (21, 22) and a plate (23) connecting the two wall sections (21 , 22) as well as at least two transport anchors (10), wherein at least one rope portion of each transport anchor extends out of the plate (23) on the side of the plate facing away from the parallel wall sections at a position next to the imaginary extension of the parallel wall sections and the anchoring portion (3) of the transport anchor extends through the plate and into one of the parallel wall sections offset to the rope portion emerging from the plate.

11. The precast concrete element according to claim 10, **characterised in that** it comprises at least 4 transport anchors which are located at the corners of an imaginary rectangle, wherein the anchoring portions (3) of two transport anchors each extend into one of the parallel wall sections (21, 22) and the rope loops (2) extend out of the plate (23) connecting these, offset to the parallel wall sections.

12. The precast concrete element according to any one of the previous claims, which is formed as a sandwich component from two interconnected, parallel wall parts made of concrete and an intermediate space between these, **characterised in that** one or more transport anchors are provided in at least one of the wall parts, which transport anchor or anchors extend out of an edge surface of one of the wall parts in such a way that the transport section is located in the intermediate space or an imaginary extension of the intermediate space.

## Revendications

1. Pièce préfabriquée en béton comprenant au moins un ancrage de transport, dans laquelle l'ancrage de transport présente un câble (1) muni d'au moins une section d'ancrage (3) ancrée dans la pièce préfabriquée en béton (20) et d'une boucle de câble (2) au niveau d'une section du câble (1) située à l'extérieur de la section d'ancrage (3), dans laquelle la section d'ancrage (3) est coudée et est agencée de façon telle que la section de câble sortant de la pièce préfabriquée en béton est décalée par rapport à l'extrémité intérieure de la section d'ancrage (3), située au-delà du coude (4), de manière transversale par rapport à la direction longitudinale du câble (1), dans laquelle la section coudée présente une armature de coudage (5) présentant des oeillets (6) fermés ou partiellement ouverts latéralement qui sont agencés dans un plan (E) ou dans des plans parallèles (E, E') décalés les uns par rapport aux autres, **caractérisée en ce que** l'armature de coudage présente au moins trois oeillets (6) agencés essentiellement les uns derrière les autres et **en ce qu'**au moins une section de câble (1a) est guidée à travers les oeillets (6) dans une direction opposée de manière alternée, de sorte que la section de câble sort de l'armature de coudage d'un côté du troisième oeillet qui est opposé au côté d'entrée du premier oeillet.

2. Pièce préfabriquée en béton selon la revendication 1, **caractérisée en ce que** sont prévues dans la région du coude deux sections de câble, s'étendant de manière parallèle et formant ensemble par la suite la boucle de câble.

3. Pièce préfabriquée en béton selon la revendication 1, **caractérisée en ce que** l'armature de coudage (5) est constituée d'un fil d'acier rigide qui présente, dans un plan (E), quatre barres transversales parallèles (7) et deux barres longitudinales (7') s'étendant de manière alternée entre des extrémités opposées des barres transversales (7) et reliant les unes aux autres respectivement une extrémité de deux barres transversales voisines.

4. Pièce préfabriquée en béton selon l'une des revendications précédentes 1 ou 3, **caractérisée en ce que** l'armature de coudage (5') présente deux sections d'extrémité (8) qui sont coudées dans une direction opposée perpendiculairement au plan des barres transversales et des barres longitudinales (7, 7').

5. Pièce préfabriquée en béton selon l'une des revendications précédentes 1 ou 2, **caractérisée en ce que** l'armature de coudage (5) est constituée de trois oeillets (6) en une rangée les uns derrière les autres, qui sont ménagés, en particulier découpés à la matrice, dans une bande de tôle approximativement rectangulaire.

6. Pièce préfabriquée en béton selon l'une des revendications précédentes 1 à 5, **caractérisée en ce que** les trois oeillets (6) présentent respectivement des côtés parallèles qui s'étendent perpendiculairement par rapport à l'extension des sections de câble guidés à travers les oeillets (6).

7. Pièce préfabriquée en béton selon l'une des revendications précédentes, **caractérisée en ce que** l'ancrage de transport est constitué d'un câble continu (1) dont les extrémités libres sont réunies parallèlement et s'étendent à travers une armature de coudage (5, 5'), une boucle de câble (2) étant formée dans une section centrale du câble (1) à distance de l'armature de coudage (5, 5').

8. Pièce préfabriquée en béton selon l'une des revendications précédentes, **caractérisée en ce que** le câble est un câble métallique, en particulier un câble métallique en acier.

9. Pièce préfabriquée en béton selon l'une des revendications précédentes, **caractérisée en ce que** la pièce préfabriquée en béton présente deux sections de paroi (21, 22) reliées en formant une région d'angle respectivement le long d'une arête et essentiellement perpendiculaires l'une à l'autre, ainsi qu'au moins un ancrage de transport (10), dans laquelle la section d'ancrage s'étend, dans la région d'angle formée par les sections de paroi, au sein d'une desdites sections de paroi, dans l'extension en s'éloignant de la région d'angle, et est ancrée dans ladite région, et s'étend, au moyen d'une boucle de câble, à partir de l'autre section de paroi, de manière latérale à côté de la région d'angle en étant décalée par rapport à un prolongement imaginaire de ladite section de paroi.

10. Pièce préfabriquée en béton selon la revendication 9, **caractérisée en ce que** la pièce préfabriquée en béton présente deux sections de paroi (21, 22) parallèles et une plaque (23) reliant les deux sections de paroi (21, 22) ainsi qu'au moins deux ancrages de transport (10), dans laquelle au moins une section de câble de respectivement un ancrage de transport s'étend hors de la plaque (23) sur le côté de la plaque opposé aux sections de paroi parallèles, au niveau d'une position adjacente au prolongement imaginaire des sections de paroi parallèles, et la section d'ancrage (3) de l'ancrage de transport s'étend, à travers la plaque et de manière décalée par rapport à la section de câble sortant de la plaque, dans respectivement une des sections de paroi parallèles.

11. Pièce préfabriquée en béton selon la revendication 10, **caractérisée en ce qu'**elle présente au moins 4 ancrages de transport qui sont agencés au niveau des coins d'un rectangle imaginaire, dans laquelle les sections d'ancrage (3) de respectivement deux ancrages de transport s'étendent respectivement dans une des sections de paroi (21, 22) parallèles, et les boucles de câble (2) s'étendent hors de la plaque (23) qui les relie de manière décalée par rapport aux sections de paroi parallèles.

12. Pièce préfabriquée en béton selon l'une des revendications précédentes, qui est réalisée sous la forme d'une pièce en sandwich à partir de deux parties de paroi parallèles en béton reliées entre elles avec un espace intermédiaire entre lesdites parties de paroi, **caractérisée en ce qu'**est/sont prévus, dans au moins une des parties de paroi, un ou plusieurs ancrage(s) de transport, qui s'étend(ent) à partir d'une surface de bord d'une des parties de paroi de façon telle que la section de transport se trouve dans l'espace intermédiaire ou dans un prolongement imaginaire de l'espace intermédiaire.
